# EUROPÄISCHE PATENTANMELDUNG

(11) **EP 2 130 467 A1**
(43) Veröffentlichungstag der Anmeldung: **09.12.2009**
(21) Anmeldenummer: 08405148.1
(22) Anmeldetag: 02.06.2008
(51) Int. Cl.: A47J 31/60

(54) **Wasserfilterkartusche für einen Wassertank einer Getränkemaschine und Getränkemaschine mit einer Wasserfilterkartusche**

(71) Anmelder: Elfo AG, 6072 Sachseln (CH)
(72) Erfinder: Schwab, Markus, 6062 Wilen (CH)
(74) Vertreter: Nückel, Thomas

(57) **Zusammenfassung**

Die erfindungsgemässe Wasserfilterkartusche (2) für einen Wassertank (1) einer Getränkemaschine weist eine Filterkammer (11) auf, in der sich Filtermaterial zum Filtern des Wassers befindet. Zudem ist ein Zwischenspeicher (4) für gefiltertes Wasser vorgesehen, wobei der Zwischenspeicher (4) über ein Mittel zum Zurückhalten des Filtermaterials (10) mit der Filterkammer (11) verbunden ist und wobei der Zwischenspeicher (4) nach oben hin offen ist.

## Beschreibung

### Technisches Gebiet

Die Erfindung betrifft eine Wasserfilterkartusche für einen Wassertank einer Getränkemaschine sowie eine Getränkemaschine mit einer Wasserfilterkartusche.

Wasserfilterkartuschen werden in Wassertanks von Getränkemaschinen eingebaut, um das im Wassertank befindliche Wasser aufzubereiten. Dazu befindet sich im Inneren der Wasserfilterkartusche ein Filtergranulat, das das durch die Filterkartusche geleitete Wasser demineralisiert und entkarbonisiert, das heisst die Karbonathärte des Wassers verringert. Zudem können damit feine Partikel herausgefiltert werden. Um das Wasser durch die Filterkartusche zu saugen, verfügt die Getränkemaschine vorzugsweise über eine Saugpumpe.

### Stand der Technik

Aus der deutschen Offenlegungsschrift DE 10 2004 039 790 A1 ist eine Filterpatrone für einen Getränkeautomaten bekannt. Die Filterpatrone umfasst ein Filtergehäuse, in dem ein Filtermaterial zwischen einem Zulauf und einem Ablauf angeordnet ist und das eine flache Bauform aufweist. Die Filterpatrone wird im Wassertank auf einen Auslass des Wassertanks, der sich im Boden des Wassertanks befindet, gesteckt. Diese Ausführungsform der Filterpatrone hat jedoch den Nachteil, dass zwischen dem Auslass am Wassertank und dem Auslass der Filterpatrone eine Dichtung erforderlich ist, um zu verhindern, dass ungefiltertes Wasser in den Auslass des Wassertanks gelangen kann.

### Darstellung der Erfindung

Eine Aufgabe der Erfindung ist es, eine Wasserfilterkartusche für einen Wassertank einer Getränkemaschine sowie eine Getränkemaschine mit einer Wasserfilterkartusche anzugeben, bei der zwischen dem Wasserfilterkartusche und dem Wassertank keine Dichtung erforderlich ist.

Die Aufgabe wird durch eine Wasserfilterkartusche für einen Wassertank einer Getränkemaschine mit den Merkmalen des Patentanspruchs 1 gelöst.

So weist die erfindungsgemässe Wasserfilterkartusche für einen Wassertank einer Getränkemaschine eine Filterkammer auf, in der sich Filtermaterial zum Filtern des Wassers befindet. Zudem ist ein Zwischenspeicher für gefiltertes Wasser vorgesehen, wobei der Zwischenspeicher über ein Mittel zum Zurückhalten des Filtermaterials mit der Filterkammer verbunden ist und wobei der Zwischenspeicher nach oben hin offen ist.

Zudem wird die Aufgabe durch eine Getränkemaschine mit einer Wasserfilterkartusche nach Patentanspruch 7 gelöst.

Die erfindungsgemässe Getränkemaschine umfasst die oben erwähnte Wasserfilterkartusche wobei die Wasserfilterkartusche so geformt ist, dass sie mit dem Wassertank einen Formschluss bildet.

Vorteilhafte Weiterbildungen der Erfindung ergeben sich aus den in den abhängigen Patentansprüchen angegebenen Merkmalen.

Bei einer Ausführungsform der Erfindung umfasst die Wasserfilterkartusche einen Einlass, der im unteren Bereich der Filterkammer angeordnet ist. Dadurch wird sichergestellt, dass der Wassertank weitestgehend entleert werden kann.

Bei einer weiteren Ausführungsform der Erfindung ist der Einlass seitlich an der Filterkammer und/oder am Boden der Filterkammer angeordnet. Dadurch wird sichergestellt, dass der Wassertank weitestgehend entleert werden kann und zudem kann ein definierter Strömungswiderstand in der Filterkammer vorgegeben werden.

Bei einer dritten Ausführungsform der Erfindung ist das Mittel zum Zurückhalten des Filtermaterials wenigstens im unteren Bereich der Filterkammer angeordnet. Damit wird erreicht, dass die Filterkammer weitestgehend entleert werden kann.

Vorteilhafter Weise ist das Mittel zum Zurückhalten des Filtermaterials eine Membran, ein Sieb, ein Fliess oder ein Gewebe.

Darüber hinaus kann bei der erfindungsgemässen Wasserfilterkartusche der Zwischenspeicher seitlich neben der Filterkammer angeordnet sein. Dies hat den Vorteil, dass der Wassertank niedrig ausgebildet sein kann, weil auch die Wasserfilterkartusche selbst nur eine geringe Bauhöhe aufweist.

Bei einer Weiterbildung der erfindungsgemässen Getränkemaschine ist vorgesehen, dass die Wasserfilterkartusche mit dem Wassertank einen Kraftschluss bildet.

Bei einer zusätzlichen Weiterbildung der erfindungsgemässen Getränkemaschine ist vorgesehen, dass die Entnahme des gefilterten Wassers aus dem Zwischenspeicher von oben erfolgt.

Schliesslich kann bei der erfindungsgemässen Getränkemaschine vorgesehen sein, dass das Volumen des Zwischenspeichers so gross dimensioniert ist, dass es für wenigstens eine Getränkeportion, die von der Getränkemaschine produziert wird, ausreicht.

### Kurze Beschreibung der Zeichnungen

Im Folgenden wird die Erfindung mit mehreren Ausführungsbeispielen anhand von sechs Figuren weiter erläutert.
- Figur 1: zeigt eine mögliche Ausführungsform eines Wassertanks mit der erfindungsgemässen Wasserfilterkartusche in einer dreidimensionalen Ansicht schräg von oben.
- Figur 2: zeigt den Wassertank mit der erfindungsgemässen Wasserfilterkartusche in einer dreidimensionalen Ansicht schräg von oben aus einer anderen Perspektive.
- Figur 3: zeigt die erfindungsgemässe Wasserfilterkartusche in einer dreidimensionalen Ansicht von oben ohne Deckel.
- Figur 4: zeigt eine mögliche Ausführungsform eines in der erfindungsgemässen Wasserfilterkartusche verwendeten Rückhalteelements.
- Figur 5: zeigt die erfindungsgemässe Wasserfilterkartusche in einer dreidimensionalen Ansicht schräg von oben mit Deckel.
- Figur 6: zeigt die erfindungsgemässe Wasserfilterkartusche in einer dreidimensionalen Ansicht schräg von unten.

### Wege zur Ausführung der Erfindung

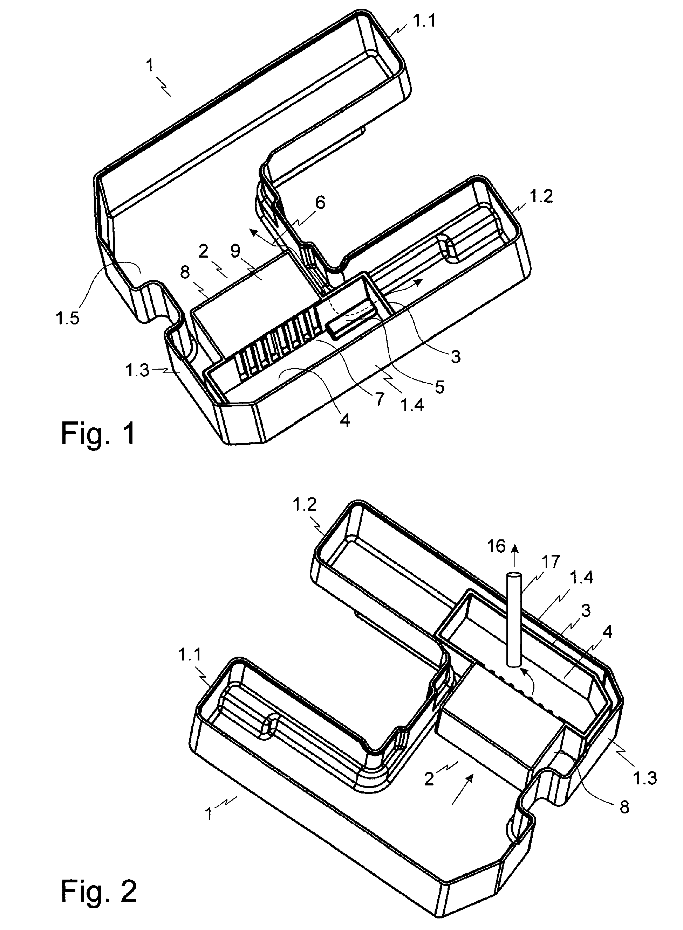

Figur 1 zeigt in einer dreidimensionalen Ansicht von oben eine mögliche Ausführungsform eines Wassertanks 1 in den eine Ausführungsform der erfindungsgemässe Wasserfilterkartusche 2 eingesetzt ist. Figur 2 zeigt den Wassertank 1 mit der Wasserfilterkartusche 2 ebenfalls in einer dreidimensionalen Ansicht von oben, aber aus einer anderen Perspektive. Der Wassertank 1 ist U-förmig ausgebildet und umfasst einen ersten Schenkel oder Flügel 1.1 und einen zweiten Schenkel oder Flügel 1.2 und befindet sich in der Regel im unteren Bereich einer in Figur 1 nicht dargestellten Getränkemaschine. Wie aus den beiden Figuren 1 und 2 ersichtlich ist, ist der Wassertank 1 relativ niedrig und hat weder im Tankboden noch in den Seitenwänden einen Auslass. Statt dessen wird das Wasser, wie in Figur 2 angedeutet, über eine Saugleitung 17 mittels einer Pumpe nach oben aus dem Zwischenspeicher 4 der Wasserfilterkartusche 2 und damit indirekt auch aus dem Wassertank 1 gesaugt.

Das Gehäuse der Wasserfilterkartusche 2 ist so geformt, dass dessen Seitenwände 3 und 8 und dessen Boden 15 mit den Seitenwänden 1.3, 1.4 und dem Boden 1.5 des Wassertanks 1 einen Formschluss bilden. Dadurch wird erreicht, dass die Wasserfilterkartusche 2 ohne weiteres in den Wassertank 1 eingesetzt und dort positioniert werden kann, ohne dass es dazu zusätzlicher Befestigungs- oder Positionierungsmittel bedarf. Insbesondere sind keine Steck- oder Schnappverbindungen erforderlich. Dies hat den Vorteil, dass der Wassertank 1 und die Wasserfilterkartusche 2 mit einem Minimum an Ecken, Kanten, Vorsprüngen und Vertiefungen auskommt, so dass der Wassertank und die Wasserfilterkartusche bei Bedarf einfach und leicht gereinigt werden können.

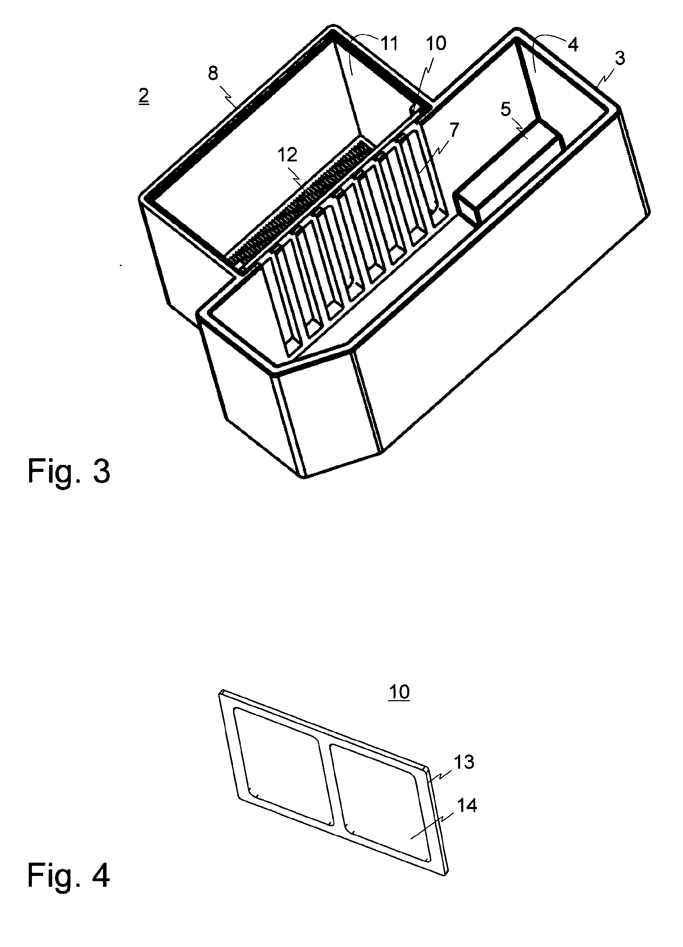

Figur 3 zeigt eine Ausführungsform der erfindungsgemässen Wasserfilterkartusche 2 in einer dreidimensionalen Ansicht schräg von oben ohne den Deckel 9. Die Wasserfilterkartusche 2 weist auf der stromaufwärtigen Seite eine mit Filtermaterial befüllt Filterkammer 11 und einen der Filterkammer 11 nachgeschalteten Zwischenspeicher 4 auf. Die Filterkammer 11 und der Zwischenspeicher 4 sind in einem gemeinsamen Gehäuse untergebracht, wobei die Seitenwand 8 die Filterkammer 11 und die Seitenwand 3 den Zwischenspeicher 4 begrenzt. Im Boden 15 der Filterkammer 11 befinden sich eine oder mehrere Einlassöffnungen 12. Nach oben hin ist die Filterkammer 11 durch einen Deckel 9 geschlossen. Der Deckel 9 kann auf die Seitenwand 8 der Filterkammer 4 beispielsweise geklebt oder geschweisst sein oder mittels einer Schnappverbindung auf der Seitenwand 8 einrasten.

Zwischen der Filterkammer 11 und dem Zwischenspeicher 4 befindet sich ein Rechen 7 und ein Rückhalteelement 10, das einerseits verhindert, dass das Filtermaterial aus der Filterkammer 11 in den Zwischenspeicher 4 gelangt, und andererseits wasserdurchlässig ist. Das Rückhalteelement wird im Folgenden auch als Mittel zu Zurückhalten des Filtermaterials bezeichnet. Der Rechen 7 ist vorgesehen, um das Rückhalteelement 10 zu stabilisieren. Dies ist insbesondere dann hilfreich, wenn das Rückhaltelement 10 ein empfindliches Flies oder Gewebe ist. In Figur 4 ist eine mögliche Ausführungsform des Rückhalteelements 10 gezeigt. Auf einem Rahmen 13 ist ein Flies, ein Gewebe, eine Membran oder ein Sieb befestigt, das zwar für Wasser, nicht aber für das Filtermaterial durchlässig ist.

Der Zwischenspeicher 4 dient dazu, das in der Filterkammer 11 gefilterte Wasser zu bevorraten, das heisst so lange zu speichern, bis die Pumpe der Getränkemaschine das Wasser über eine Saugleitung 17, welche in Figur 2 vereinfacht dargestellt ist, aus dem Zwischenspeicher 4 saugt. Durch den Zwischenspeicher 4 wird erreicht, dass bei der Wasserentnahme der Pumpe ausreichend gefiltertes Wasser zur Verfügung steht.

Vorteilhafter Weise ist das Volumen des Zwischenspeichers 4 so gross dimensioniert, dass es für wenigstens eine Getränkeportion, die von der Getränkemaschine produziert wird, ausreicht. Dadurch wird verhindert, dass bei einem Portioniervorgang der Zwischenspeicher 4 geleert wird und gefiltertes Wasser aus der Filterkammer 11 nicht schnell genug in den Zwischenspeicher 4 nachströmen kann.

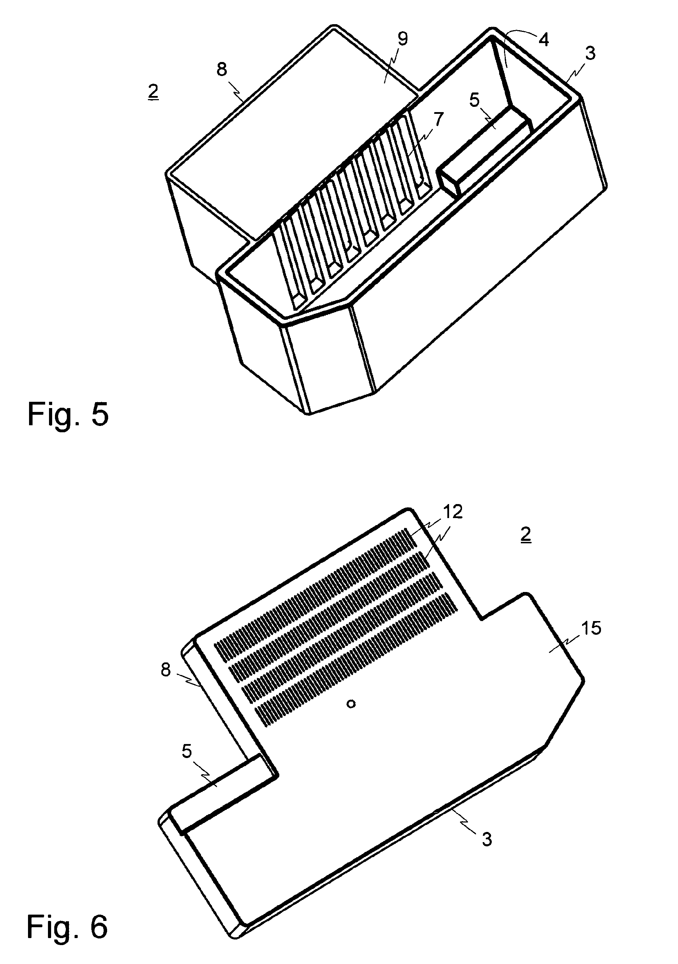

In Figur 5 ist die erfindungsgemässe Wasserfilterkartusche 2 in einer dreidimensionalen Ansicht schräg von oben mit Deckel 9 und in Figur 6 schräg von unten dargestellt.

Im Betrieb strömt das zu filternde Wasser aus dem Wassertank 1 durch die Einlassöffnungen 12 in die mit Filtermaterial gefüllte Filterkammer 11. In Figur 2 ist die Strömungsrichtung des Wassers mit Pfeilen 16 gekennzeichnet. Während das Wasser durch das Filtermaterial strömt, wird es gereinigt und gelangt anschliessend durch das Rückhalteelement 10 in den Zwischenspeicher 4. Dort wird es so lange bevorratet, bis es über die Saugleitung 17 abgesaugt wird. Die Saugleitung 17 wird dazu von oben in den oben offenen Zwischenspeicher 4 getaucht. Je nach Anwendungsfall kann der Zwischenspeicher 4 auf der Oberseite mehr oder weniger weit offen sein.

Die Filterkartusche 2 weist im Bereich des Zwischenspeichers 4 auf dessen Unterseite eine Ausnehmung 5 auf, die dafür sorgt, dass das Wasser, das sich im Flügel 1.2 des Wassertanks 1 befindet, jederzeit von dort heraus in den anderen Teil des Wassertanks 1 strömen kann. Dadurch findet ein permanenter Niveauausgleich zwischen den beiden Flügeln 1.1 und 1.2 statt. Die Strömung des Wassers ist in Figur 1 durch die Pfeile 6 symbolisch dargestellt.

Die erfindungsgemässe Wasserfilterkartusche 2 kann in einer Getränkemaschine, wie beispielsweise einer Kaffeemaschine verwendet werden.

Die vorhergehende Beschreibung der Ausführungsbeispiele gemäss der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

### Bezugszeichenliste

- 1: Wassertank
- 1.1: linker Flügel
- 1.2: rechter Flügel
- 1.3: Seitenwand
- 1.4: Seitenwand
- 1.5: Tankboden
- 2: Wasserfilter
- 3: Wand des Zwischenspeichers
- 4: Zwischenspeicher
- 5: Kanal
- 6: Strömung
- 7: Kamm oder Rechen
- 8: Wand der Filterkammer
- 9: Deckel der Filterkammer
- 10: Rückhalteelement
- 11: Filterkammer
- 12: Einlass
- 13: Rahmen
- 14: Fliess, Gewebe, Membran oder Sieb
- 15: Boden
- 16: Fliessrichtung
- 17: Saugleitung

## Patentansprüche

1. Wasserfilterkartusche für einen Wassertank einer Getränkemaschine,
- mit einer Filterkammer (11), in der sich Filtermaterial zum Filtern des Wassers befindet,
- mit einem Zwischenspeicher (4) für gefiltertes Wasser,
-- wobei der Zwischenspeicher (4) über ein Mittel zum Zurückhalten des Filtermaterials (10) mit der Filterkammer (11) verbunden ist, und
-- wobei der Zwischenspeicher (4) nach oben hin offen ist.

2. Wasserfilterkartusche nach Patentanspruch 1,
mit einem Einlass (12), der im unteren Bereich der Filterkammer (11) angeordnet ist.

3. Wasserfilterkartusche nach Patentanspruch 2,
bei der der Einlass (12) seitlich an der Filterkammer (11) und/oder am Boden der Filterkammer (11) angeordnet ist.

4. Wasserfilterkartusche nach Patentanspruch 1 oder 2,
bei der das Mittel zum Zurückhalten des Filtermaterials (10) wenigstens im unteren Bereich der Filterkammer (11) angeordnet ist.

5. Wasserfilterkartusche nach einem der Patentansprüche 1 bis 4,
bei der das Mittel zum Zurückhalten des Filtermaterials (10) eine Membran, ein Sieb, ein Fliess oder ein Gewebe ist.

6. Wasserfilterkartusche nach einem der Patentansprüche 1 bis 5,
bei der der Zwischenspeicher (4) seitlich neben der Filterkammer (11) angeordnet ist.

7. Getränkemaschine mit einer Wasserfilterkartusche nach einem der Patentansprüche 1 bis 6,
bei der die Wasserfilterkartusche (2) mit dem Wassertank (1) einen Formschluss bildet.

8. Getränkemaschine nach einem der Patentansprüche 1 bis 7,
bei der die Wasserfilterkartusche (2) mit dem Wassertank (1) einen Kraftschluss bildet.

9. Getränkemaschine nach einem der Patentansprüche 1 bis 8,
bei der die Entnahme des gefilterten Wassers aus dem Zwischenspeicher (4) von oben erfolgt.

10. Getränkemaschine nach einem der Patentansprüche 1 bis 8,
bei der das Volumen des Zwischenspeichers (4) so gross dimensioniert ist, dass es für wenigstens eine Getränkeportion, die von der Getränkemaschine produziert wird, ausreicht.
